# EUROPÄISCHE PATENTSCHRIFT

(11) **EP 4 390 065 B1**
(45) Veröffentlichungstag und Bekanntmachung des Hinweises auf die Patenterteilung: **26.02.2025**
(21) Anmeldenummer: 22215563.2
(22) Anmeldetag: 21.12.2022
(51) Int. Cl.: F01K 7/16, F01D 25/12, F23C 7/08

(54) **KRAFTWERK**
POWER PLANT
CENTRALE ÉLECTRIQUE

(43) Veröffentlichungstag der Anmeldung: 26.06.2024
(73) Patentinhaber: SWISS KRONO Tec AG, 6004 Luzern (CH)
(72) Erfinder: Lemke, Hartmut, 16845 Wusterhausen/Dosse OT Kantow (DE)
(74) Vertreter: Gramm, Lins & Partner Patent- und Rechtsanwälte PartGmbB

(56) Entgegenhaltungen:
- WO-A1-2017/060055
- US-A- 3 938 934
- US-A- 4 363 216
- US-A- 5 457 951
- US-A1- 2005 039 433
- US-A1- 2012 255 471
- US-A1- 2017 074 164
- US-A1- 2018 163 570

## Beschreibung

Die Erfindung betrifft ein Kraftwerk mit einer Verbrennungsanlage, einem Turbosatz, einem Schmierkreislauf und einem Wärmetauscher. Gemäß einem zweiten Aspekt betrifft die Erfindung ein Verfahren zum Betreiben eines Kraftwerks.

Aus dem Stand der Technik sind eine Vielzahl von Kraftwerken mit einer Verbrennungsanlage und einer Turbine bekannt. In einer Verbrennungsanlage wird Dampf erzeugt, mit dem die Turbine angetrieben wird. Ein Generator wandelt die kinetische Energie der Turbine in elektrische Energie um. Die elektrische Energie wird entweder unmittelbar verwendet oder in das öffentliche Stromnetz eingespeist. Bewegliche Teile der Turbine, des Generators und/oder eines etwaigen Getriebes werden mittels Öl geschmiert und gekühlt. Das Öl zirkuliert in einem Schmierkreislauf, an dem ein Öl/Wasser-Wärmetauscher angeordnet ist, der mit Kühlwasser durchströmt ist. Der Öl/Wasser-Wärmetauscher dient dabei zum Kühlen des Öles des Schmierkreislaufes. Das Kühlwasser zirkuliert in einem Kühlkreislauf an dem ein Wasser/Luft-Wärmetauscher angeordnet ist, der beispielsweise als Tischkühler ausgeführt ist. Um eine ausreichende Kühlung des Kühlwassers sicherzustellen, wird Luft mit Ventilatoren auf den Tischkühler geleitet. Das Betreiben der Ventilatoren führt einerseits zu einem hohen Energieverbrauch und andererseits zu hohen Lärmemissionen des Kraftwerks.

Dokument US3938934A offenbart eine Anlage zur Luftvorwärmung einer Verbrennungsanlage wobei die Zuluft durch Wärmetausch mit Warmwasser erwärmt wird. Dokumente US2017/074164A1 und US2005/039433A1 offenbaren jeweils ein Turbosatz mit einem Schmierkreislauf und einem Wärmetauscher zum Kühlen eines Kühlfluids.

Die Aufgabe der Erfindung ist es, Nachteile aus dem Stand der Technik zu vermeiden oder zu vermindern.

Die Erfindung löst dieses Problem durch ein Kraftwerk mit (a) einer Verbrennungsanlage mit (i) einem Brennraum zum Erzeugen von Dampf und (ii) einer Zuluftleitung zum Zuführen von Zuluft in den Brennraum, (b) einem Turbosatz mit (i) einer Turbine mit einem Rotor und (ii) einem Generator, (c) einem Schmierkreislauf zum Schmieren und Kühlen des Turbosatzes, wobei in dem Schmierkreislauf ein Kühlfluid zirkuliert, und (d) einem Wärmetauscher zum Kühlen des Kühlfluid, das sich dadurch auszeichnet, dass (e) der Wärmetauscher angeordnet ist zum Erwärmen der Zuluft.

In dem Brennraum wird ein Brennstoff verbrannt. Während der Verbrennung wird vorzugsweise kontinuierlich Zuluft in den Brennraum geleitet. Eine Flüssigkeitsleitung verläuft zumindest teilweise durch den Brennraum. Eine in der Flüssigkeitsleitung geförderte Flüssigkeit wird beim Passieren des Brennraums erhitzt und verdunstet zu Dampf. Die Flüssigkeit ist insbesondere Wasser. Der Dampf wird über die Flüssigkeitsleitung die Turbine geleitet und treibt dort den Rotor der Turbine an und versetzt diesen in eine rotatorische Bewegung. Der Generator wandelt die kinetische Energie des Rotors der Turbine oder die kinetische Energie eines weiteren Rotors, der beispielsweise über einen Getriebe mit dem Rotor der Turbine verbunden ist, in elektrische Energie um. Das Kühlfluid im Schmierkreislauf wird durch die Bewegung des Rotors der Turbine und/oder durch die Bewegung des weiteren Rotors erwärmt. Das erwärmte Kühlfluid wird im Schmierkreislauf zu dem Wärmetauscher gefördert. In dem Wärmetauscher wird das Kühlfluid gekühlt und die Zuluft erwärmt.

Vorteilhaft ist, dass das erfindungsgemäße Kraftwerk geringere Lärmemissionen verursacht und zudem einen geringeren Installations- und Wartungsaufwand erfordert. Es werden kein separater Kühlkreislauf sowie keine Ventilatoren benötigt, sodass der Energieverbrauch gesenkt wird.

Unter einer Verbrennungsanlage wird insbesondere eine Vorrichtung zum Erzeugen von Wärmeenergie durch Verbrennung eines Brennstoffes verstanden. Als Brennstoff werden insbesondere Brenngas, Öl, Biomasse und/oder eine Festbrennstoff, insbesondere Holz oder Pellets verwendet. Die Biomasse kann dabei sowohl fest, flüssig als auch gasförmig sein.

Unter einem Brennraum wird der Raum verstanden, in dem das Verbrennen des Brennstoffs erfolgt.

Unter einer Turbine wird eine Vorrichtung zum Umwandeln von Wärmeenergie in mechanische Arbeit, insbesondere einer Dampfturbine verstanden. Unter einem Rotor wird insbesondere eine Welle, insbesondere einer Turbinenwelle verstanden. Durch das Bewegen des Rotors wird mechanische Arbeit verrichtet.

Unter einem Wärmetauscher wird insbesondere eine Vorrichtung, die thermische Energie von einem Stoffstrom auf einen anderen Stoffstrom überträgt verstanden.

Als Kühlfluid wird insbesondere ein Schmieröl verwendet.

Vorzugsweise weist das Kraftwerk einen Kondensator zum Kondensieren des Dampfes nach dem Austritt aus der Turbine auf. Dadurch ist es möglich, einen Flüssigkeitskreislauf zu schließen, bei dem bevorzugt die Flüssigkeit der Reihe nach durch die Verbrennungsanlage die Turbine und den Kondensator geführt wird. Vorzugsweise ist an dem Flüssigkeitskreislauf eine Flüssigkeitspumpe zum Fördern der Flüssigkeit in dem Flüssigkeitskreislauf angeordnet.

Bevorzugt weist der Turbosatz eine Einwellenanordnung auf. Bei eine Einwellenanordnung sind der Rotor der Turbine und der Rotor des Generators einstückig ausgebildet. Alternativ dazu weist der Turbosatz eine Mehrwellenanordnung auf. In diesem Fall weist der Turbosatz vorzugsweise ein Getriebe auf. Vorteilhafterweise ist dieses Getriebe zwischen der Turbine und den Generator angeordnet.

Vorzugsweise ist der Schmierkreislauf zum Schmieren und Kühlen der Lager der Turbine, des Generators und/oder eines Getriebes angeordnet. Auf diese Weise wird die im Turbosatz entstehende Wärme unmittelbar von den beweglichen Komponenten abgeführt und diese zugleich geschmiert.

Vorzugsweise ist der Wärmetauscher an oder zumindest teilweise, vorzugsweise jedoch vollständig in der Zuluftleitung angeordnet. Auf diese Weise wird eine effiziente Erwärmung der Zuluft ermöglicht.

Bevorzugt ist das Kraftwerk dazu eingerichtet, die Zuluft zusätzlich in Strömungsrichtung hinter dem Wärmetauscher zu erhitzen. Vorteilhaft daran ist, dass die Effizienz der Verbrennungsanlage weiter gesteigert wird und eventuelle Schwankungen in der Temperatur der Zuluft ausgeglichen werden können. Vorzugsweise ist dazu eine Heizvorrichtung in Strömungsrichtung hinter dem Wärmetauscher an oder in der Zuluftleitung angeordnet. Beispielsweise ist ein weiterer Wärmetauscher, insbesondere ein Rippenrohrheizkörper an oder in der Zuluftleitung angeordnet. Bevorzugt ist die Heizvorrichtung von einem Heizfluid durchströmt, das die Heizvorrichtung erhitzt. Als Heizfluid werden insbesondere Wasser und/oder Wärmeträgeröl verwendet. Das Heizfluid wird insbesondere durch die Abwärme der Verbrennungsanlage und/oder sonstige Abwärme des Kraftwerks erhitzt.

Vorzugsweise ist an oder in der Zuluftleitung zumindest ein Temperatursensor angeordnet, der dazu eingerichtet ist, eine Ist-Zulufttemperatur zu erfassen und ein Signal an eine Steuereinheit zu senden. Bevorzugt ist die Steuereinheit eingerichtet zum Steuern der Heizvorrichtung in Abhängigkeit von dem Signal des zumindest einen Temperatursensor, um die Zuluft auf eine vorgebbare Soll-Zulufttemperatur zu erwärmen. Dies hat den Vorteil, dass auch bei einer schwankenden Erwärmung der Zuluft durch den Wärmetauscher mithilfe der Heizvorrichtung eine konstante Zulufttemperatur gewährleistet wird.

Eine Weiterbildung der Erfindung zeichnet sich dadurch aus, dass die Zuluftleitung eine Sekundärluftzuleitung zum Zuführen von Sekundärluft in den Brennraum ist. Die Zuluft ist bei dieser Variante zumindest in eine Primärluft und eine Sekundärluft aufgeteilt. Grundsätzlich besteht die Möglichkeit die Zuluft weiter aufzuteilen, insbesondere in eine Tertiärluft.

Die Primärluft ist die Zuluft, die unter einem Rost in den Brennraum geleitet wird. Die Sekundärluft ist die Zuluft, die über dem Rost in den Brennraum geleitet wird. Insbesondere ist die Sekundärluft Frischluft, die aus der Umgebung der Verbrennungsanlage entnommen wird. Unter einem Rost wird insbesondere ein Element in dem Brennraum verstanden, auf oder in dem sich der Brennstoff befindet.

Das Kraftwerk weist entweder zumindest zwei Zuluftleitungen auf oder die Zuluftleitung ist zumindest zweigeteilt. Die Primärluft wird über eine Primärluftzuleitung in den Brennraum geleitet. Die Sekundärluft wird über eine Sekundärluftzuleitung in den Brennraum geleitet.

Das Erwärmen der Sekundärluft hat zum Vorteil, dass die Verbrennungsanlage effizienter betrieben wird. Insbesondere wird durch die vorgewärmte Sekundärluft Brennstoff eingespart. Zugleich ist der Sekundärluftstrom ein vorwiegend kontinuierlicher Luftstrom, sodass ein stetiges Kühlen des Kühlfluids erreicht wird. Zudem ist der Sekundärluftstrom - wie gemäß einer bevorzugten Ausführungsform vorgesehen - größer als der Primärluftstrom, sodass eine große Kühlleistung erzielt wird.

Ein weiterer Vorteil des Erwärmens der Sekundärluft ist, dass dem Brennraum in der Regel mehr Sekundärluft als Primärluft zugeführt wird und somit an der Sekundärluftzuleitung in der Regel ein größerer Wärmeübergang erzielt werden kann.

Bevorzugt der Wärmetauscher an einer Sekundärluftzuleitung und ein weiterer Wärmetauscher an der Primärluftzuleitung angeordnet. Dadurch kann eine höhere Kühlleistung auf das Kühlfluid des Schmierkreislaufes bewirkt und zugleich die Effizienz des Kraftwerks gesteigert werden.

Vorzugsweise weist das Kraftwerk eine Steuereinheit auf, die dazu eingerichtet ist, einen vorgebaren Primärluftstrom und oder einen vorgebbare Sekundärluftstrom einzustellen. Beispielsweise ist dazu an der entsprechenden Zuluftleitung eine steuerbares Ventil angeordnet, das durch die Steuereinheit angesteuert wird, oder ein regelbarer Ventilator, der durch eine Steuereinheit angesteuert wird, ist in der entsprechenden Zuluftleitung angeordnet. Über eine Veränderung des Primärluftstroms und/oder des Sekundärluftstroms kann die Verbrennungsgüte des Brennstoffs gesteuert werden.

Bevorzugt ist die Sekundärluftzuleitung in Strömungsrichtung hinter dem Wärmetauscher in mehrere, strömungstechnisch parallelgeschaltete Sekundärluftzuleitungsabschnitte aufgeteilt. Vorzugsweise münden die Sekundärluftzuleitungsabschnitte über Sekundärlufteinlässe an verschiedenen Stellen, insbesondere an verschiedenen Höhen in den Brennraum. Vorteilhafterweise sind an dem Brennraum auf zumindest einer Höhe zwei oder mehr Sekundärlufteinlässe diametral gegenüberliegend und/oder in Umfangsrichtung gleich zueinander beabstandet angeordnet. Vorzugsweise sind auf zumindest zwei, bevorzugt auf zumindest drei, insbesondere auf zumindest vier verschiedenen Höhen Sekundärlufteinlässe an dem Brennraum angeordnet.

Vorzugsweise ist die Verbrennungsanlage ein Biomasse-Verbrennungskessel und/oder ein Festbrennstoff-Verbrennungskessel, insbesondere ein Holz-Verbrennungskessel oder ein Pellet-Verbrennungskessel. Insbesondere besitzt das Kraftwerk vorzugsweise eine Biomasse-Zuführzuführung, die angeordnet ist zum Zuführen von Biomasse in den Brennraum

Bevorzugt ist der Wärmetauscher ein Rippenrohrwärmetauscher. Vorteilhaft an der Verwendung von Rippenrohrwärmetauscher ist, dass diese vergleichsweise günstig in der Anschaffung und zudem widerstandsfähig sowie flexibel anpassbar sind und vergleichsweise wenig Platz benötigen.

Vorzugsweise ist der Wärmetauscher als Öl/Luft-Wärmetauscher ausgeführt. Insbesondere ist der Wärmetauscher dazu eingerichtet, Wärmeenergie von dem Kühlfluidstrom des Schmierkreislaufs auf den Luftstrom in der Zuluftleitung zu übertragen. Vorzugsweise ist der Kühlfluidstrom in dem Wärmetauscher dem Luftstrom in der Zuluftleitung entgegengerichtet. Dadurch wird eine effiziente Wärmeübertragung erreicht. Es ist insbesondere kein Zwischenmedium erforderlich, das die Effizienz sowie den Aufwand zum Betreiben und Warten der Anlage vergrößern würde.

Eine Weiterbildung der Erfindung zeichnet sich dadurch aus, dass der Rotor über zumindest ein Lager in der Turbine angeordnet ist und das zumindest eine Lager mit dem Schmierkreislauf strömungstechnisch verbunden ist. Vorzugsweise ist der Schmierkreislauf zum Schmieren und Kühlen des zumindest einen Lagers angeordnet.

Bevorzugt weist das Kraftwerk eine Notkühlvorrichtung zum Kühlen des Kühlfluides auf. Vorzugsweise ist die Notkühlvorrichtung an- und ausschaltbar. Wenn die Temperatur des Kühlfluides eine vorgegebene Maximal-Temperatur überschreitet, wird automatisch die Notkühlvorrichtung aktiviert. Die Maximal-Temperatur ist insbesondere so gewählt, dass bei einem Überschreiten eine ausreichende Kühlung der gekühlten und geschmierten Komponenten des Turobosatzes, insbesondere des Rotors der Turbine nicht sichergestellt ist.

Vorzugsweise ist dazu am Schmierkreislauf zumindest ein Temperatursensor zum Erfassen einer Ist-Kühlfluidtemperatur angeordnet, der ein Signal an eine Steuereinheit sendet. Bevorzugt weist die Notkühlvorrichtung den zumindest einen Temperatursensor und/oder die Steuereinheit auf. Vorzugsweise ist die Steuereinheit dazu eingerichtet, die Notkühlvorrichtung zu aktivieren, sobald die Ist-Kühlfluidtemperatur ein vorgebbares Kriterium erfüllt, insbesondere über einem vorgebbaren Grenzwert liegt. Bevorzugt ist die Steuereinheit dazu eingerichtet, die Notkühlvorrichtung zu deaktiveren, sobald die Ist-Kühlfluidtemperatur in einem vorgebbaren Sollbereich und/oder unterhalb eines weiteren vorgebbaren Grenzwerts liegt. Die Notkühlvorrichtung weist insbesondere einen Notkühlwärmetauscher zum Kühlen des Kühlfluids auf, der beispielsweise mit Kühlwasser durchströmt ist. Die Steuereinheit ist vorzugsweise dazu eingerichtet, eine Kühlwasserpumpe zum Fördern von Kühlwasser in den Notkühlwärmetauscher zu aktivieren, wenn die Ist-Kühlfluidtemperatur über einem vorgebbaren Grenzwert liegt.

Vorzugsweise ist der Wärmetauscher höchstens 50 m, bevorzugt höchstens 20 m, besonders bevorzugt höchstens 10 m von dem Turbosatz und/oder der Verbrennungsanlage entfernt angeordnet. Dadurch werden die Wärmeverluste des Kühlfluids auf dem Weg von dem Turbosatz zu dem Wärmetauscher und/oder die Wärmeverluste der Zuluft auf dem Weg von dem Wärmetauscher zur Verbrennungsanlage reduziert.

Gemäß einem zweiten Aspekt betrifft die Erfindung ein Verfahren zum Betreiben eines Kraftwerks mit einer Verbrennungsanlage, die einen Brennraum und eine Zuluftleitung zum Zuführen von Zuluft aufweist, mit einem Turbosatz, der einen Generator und eine Turbine mit einem Rotor aufweist, mit einem Schmierkreislauf und mit einem Wärmetauscher, mit den Schritten: (a) Schmieren und Kühlen des Turbosatzes mit einem Kühlfluid, das in dem Schmierkreislauf zirkuliert, (b) Zuführen des Kühlfluids in den Wärmetauscher und (c) Erwärmen der Zuluft durch den Wärmetauscher.

Vorzugsweise ist an dem Schmierkreislauf ein Filter zum Filtern des Kühlfluids angeordnet.

Im Folgenden wird die Erfindung anhand der beigefügten Zeichnungen näher erläutert. Dabei zeigt
- Figur 1: eine schematische Darstellung eines erfindungsgemäßen Kraftwerks in einer ersten Variante,
- Figur 2: eine schematische Darstellung eines erfindungsgemäßen Kraftwerks in einer zweiten Variante und
- Figur 3: eine schematische Darstellung eines Flüssigkeitskreislaufes in einem erfindungsgemäßen Kraftwerk.

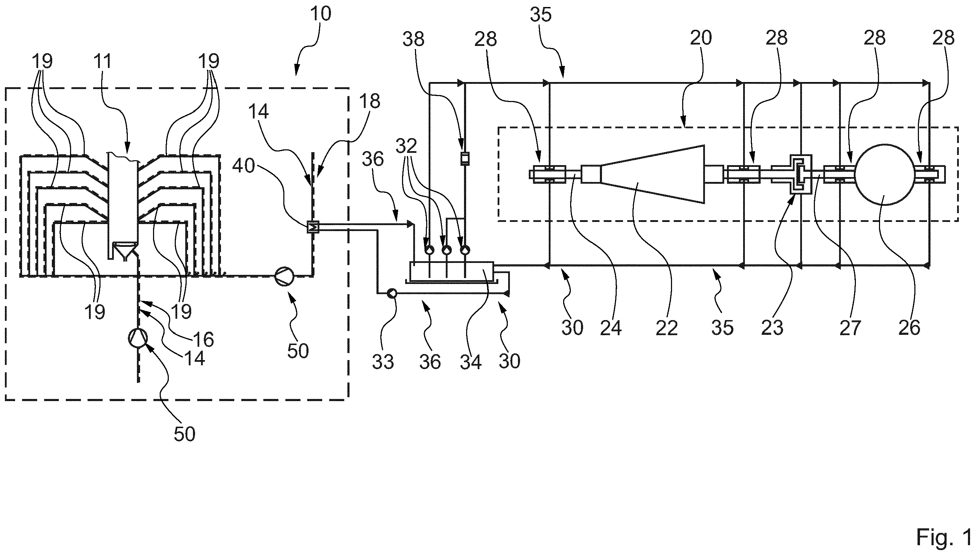

Figur 1 zeigt eine schematische Darstellung eines erfindungsgemäßen Kraftwerks mit einer Verbrennungsanlage 10 und einem Turbosatz 20. Die Verbrennungsanlage 10 weist einen Kessel 11 mit einem nicht gezeigten Brennraum auf. Durch den Brennraum verläuft eine nicht gezeigte Flüssigkeitsleitung, in der eine Flüssigkeit gefördert wird. Die Flüssigkeit in der Flüssigkeitsleitung verdunstet beim Passieren des Brennraums zu Dampf.

Die Verbrennungsanlage weist zwei Zuluftleitungen 14 auf, wobei die eine Zuluftleitung 14 eine Primärluftzuleitung 16 ist, über die Primärluft von unten in den Brennraum geleitet wird, und die andere Zuluftleitung 14 eine Sekundärluftzuleitung 18, über die Sekundärluft seitlich in den Brennraum geleitet wird.

An der Primärluftzuleitung 16 und der Sekundärluftzuleitung 18 ist jeweils ein Ventilator 50 angeordnet. Grundsätzlich besteht auch die Möglichkeit, statt zweier separater Zuluftleitungen 14 eine einzelne Zuluftleitung bereitzustellen, die ggf. in eine Primärluftzuleitung 16 und eine Sekundärluftzuleitung 18 entzweit ist. In diesem Fall reicht es, wenn ein Ventilator 50 an der Zuluftleitung 14 angeordnet ist.

In oder an der Sekundärluftzuleitung 18 ist ein Wärmetauscher 40 zum Erwärmen der Sekundärluft angeordnet. Beispielsweise handelt es sich bei dem Wärmetauscher um einen Rippenrohrheizkörper, der mit dem Kühlfluid durchströmt und von der Zuluft, insbesondere der Sekundärzuluft, umströmt ist.

In Strömungsrichtung der Sekundärluft hinter dem Wärmetauscher 40 ist die Sekundärluftzuleitung in der gezeigten Ausführungsform in mehrere Sekundärluftzuleitungsabschnitte 19 aufgeteilt, die an ihrem Ende in Strömungsrichtung über Sekundärlufteinlässe in den Brennraum münden. Die Sekundärlufteinlässe sind auf verschiedenen Höhen angeordnet, wobei jeweils zwei Sekundärlufteinlässe auf der gleichen Höhe und diametral gegenüberliegend angeordnet sind. Es besteht auch die Möglichkeit mehr als zwei Sekundärlufteinlässe auf der gleichen Höhe anzuordnen, die vorzugsweise in Umfangsrichtung zueinander gleich beabstandet sind.

Der Turbosatz 20 weist eine Turbine 22, ein Getriebe 23, einen Generator 26 sowie mehrere Lager 28 auf. Die Turbine 22 weist einen Rotor 24 auf. Der Generator 26 weist einen weiteren Rotor 27 auf. Der Rotor 24 ist die Antriebswelle des Getriebes 23, während der weitere Rotor 27 die Antriebswelle des Getriebes 23 darstellt. Das Getriebe dient zum Wandeln und Übertragen eines Drehmoments des Rotors 24 in ein Drehmoment des weiteren Rotors 27. Der Rotor 24 und der weitere Rotor 27 sind über jeweils zwei Lager 28 gelagert.

Die Lager 28 sowie das Getriebe 23 sind strömungstechnisch mit einem Schmierkreislauf 30 verbunden. Die Kühlfluidleitungsabschnitte, an denen die Lager 28 angeordnet sind, sind strömungstechnisch parallel geschaltet. In dem Schmierkreislauf 30 zirkuliert ein Kühlfluid zum Schmieren und Kühlen des Turbosatz das.

An dem Schmierkreislauf 30 ist ein Tank 34 für das Kühlfluid angeordnet. Von dem Tank 34 aus wird das Kühlfluid mittels Kühlfluidpumpen 32 in dem Schmierkreislauf 30 bewegt. Die drei Kühlfluidpumpen 32 sind in der gezeigten Variante an zwei parallel geschalteten Kühlfluidleitungsabschnitten angeordnet, wobei an einem dieser Kühlfluidleitungsabschnitte zwei Kühlfluidpumpen parallel geschaltet angeordnet sind. An einem Kühlfluidleitungsabschnitt ist ein Filter 38 zum Filtern des Kühlfluids angeordnet. Es besteht auch die Möglichkeit, nur eine Kühlfluidpumpe zum Fördern des Kühlfluids zu verwenden. Zudem besteht die Möglichkeit, eine zusätzliche Not-Kühlfluidpumpe in dem Schmierkreislauf 30 anzuordnen, die insbesondere nur bei Ausfall der Stromversorgung des Kraftwerks aktiviert wird.

Der Schmierkreislauf 30 weist einen Kühlabschnitt 36 und einen Schmierabschnitt 35 auf. Der Kühlabschnitt 36 und der Schmierabschnitt 35 sind zwei Teilkreisläufe, die über den Tank 34 miteinander verbunden sind. In dem Kühlabschnitt 36 ist der Wärmetauscher 40 angeordnet. In dem Kühlabschnitt 36 wird das Kühlfluid beim Passieren des Wärmetauschers 40 gekühlt. In dem Schmierabschnitt 35 ist der Turbosatz 20 angeordnet. In dem Schmierabschnitt 35 wird das Kühlfluid beim Passieren des Turbosatzes 20 erwärmt. Das Kühlfluid im Schmierabschnitt 35 schmiert und kühlt zugleich den Turbosatz 20.

An dem Kühlabschnitt 36 ist eine Kühlfluidpumpe 32 angeordnet, über die das Kühlfluid von dem Tank 34 in den Wärmetauscher 40 und von dem Wärmetauscher 40 wieder zurück in den Tank 34 gefördert wird. Der Wärmetauscher 40 ist an oder in der Sekundärluftzuleitung 18 angeordnet. Das Kühlfluid des Schmierkreislaufs 30 wird beim Passieren des Wärmetauschers 40 gekühlt. Zugleich wird die Sekundärluft in der Sekundärluftzuleitung 18 beim Passieren des Wärmetauschers 40 erwärmt.

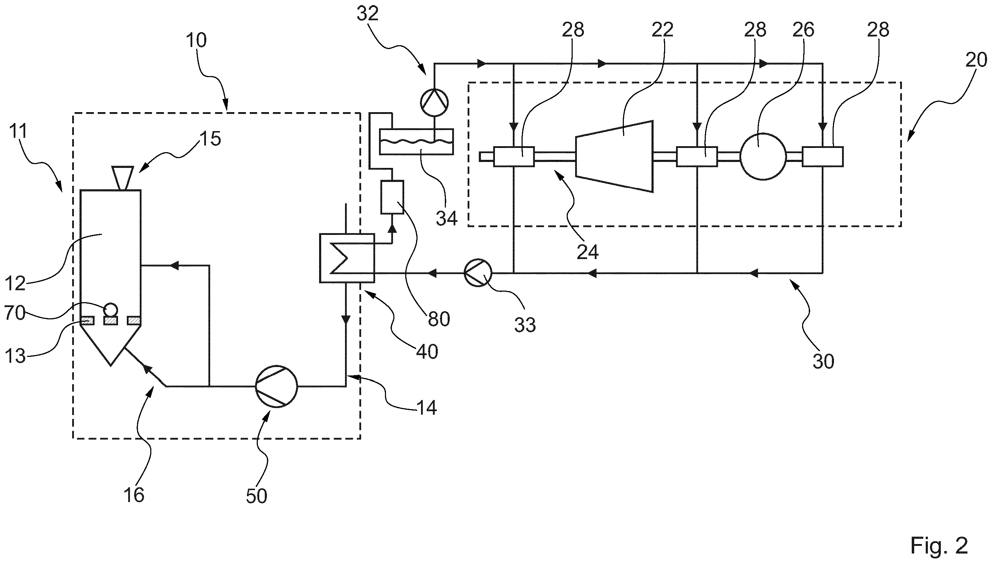

Figur 2 zeigt eine schematische Darstellung eines erfindungsgemäßen Kraftwerks in einer zweiten Variante. Das Kraftwerk weist eine Verbrennungsanlage 10 und einen Turbosatz 20 auf. Die Verbrennungsanlage 10 weist einen Kessel 11 mit einem Brennraum 12 auf. In dem Brennraum 12 ist ein Rost 13 angeordnet, auf dem ein Brennstoff 70 angeordnet ist.

Über eine Zuluftleitung 14 wird Zuluft in den Brennraum 12 geleitet an der Zuluftleitung 14 ist ein Ventilator 50 zum Fördern der Zuluft angeordnet. In Strömungsrichtung hinter dem Ventilator 50 ist die Zuluftleitung 14 in eine Primärluftzuleitung 16 und eine Sekundärluftzuleitung 18 aufgeteilt. Über die Primärluftzuleitung 16 wird Primärluft unterhalb des Rosts 13 in den Brennraum 12 geleitet. Über die Sekundärluftzuleitung 18 wird Sekundärluft oberhalb des Rosts 13 in den Brennraum geleitet. Grundsätzlich ist es auch möglich, die Zuluft über eine einzige Leitung in den Brennraum zu leiten. An der Oberseite des Kessels 11 ist ein Abgasstutzen 15 zum Abführen der Abgase angeordnet.

Der Turbosatz 20 weist eine Turbine 22 mit einem Rotor 24, einen Generator 26 und mehrerer Lager 28 auf. Die Lager 28 sind außerhalb der Turbine 22 und des Generators 26 angeordnet. Grundsätzlich ist es möglich, Lager 28, insbesondere alle Lager 28 in der Turbine und/oder in dem Generator 26 anzuordnen. Der Rotor 24 der Turbine 22 ist zugleich der Rotor des Generators 26. Die Lager 28 dienen zur Lagerung des Rotors 24. Diese Anordnung wird als Einwellenanordnung bezeichnet. Es ist auch möglich im Zuge einer Mehrwellenanordnung ein Getriebe zwischen der Turbine 22 und den Generator 26 anzuordnen.

Die Lager 28 sind strömungstechnisch mit einem Schmierkreislauf 30 verbunden. In dem Schmierkreislauf 30 zirkuliert ein Kühlfluid zum Schmieren und Kühlen des Turbosatz das 20. An dem Schmierkreislauf 30 ist ein Tank 34 angeordnet. Eine Kühlfluidpumpe 32 fördert das Kühlfluid in dem Schmierkreislauf 30. Die Kühlfluidleitungsabschnitte, an denen die Lager 28 angeordnet sind, sind strömungstechnisch parallel geschaltet.

Nach dem Passieren des Turbosatzes 20 wird das Kühlfluid mit Hilfe einer weiteren Kühlfluidpumpe 33 in den Wärmetauscher 40 geleitet. Die weitere Kühlfluidpumpe 33 ist in Strömungsrichtung hinter dem Turbosatz 20 und vor dem Wärmetauscher 40 angeordnet. Der Wärmetauscher 40 ist in oder an der Zuluftleitung 14 angeordnet. Das Kühlfluid wird beim Durchströmen des Wärmetauschers 40 gekühlt, während die Zuluft in der Zuluftleitung 14 beim Passieren des Wärmetauschers 40 erwärmt wird.

In der gezeigten Ausführungsform ist in Strömungsrichtung hinter dem Wärmetauscher 40 eine Notkühlvorrichtung 80 an dem Schmierkreislauf 30 angeordnet. Alternativ kann die Notkühlvorrichtung 80 auch in Strömungsrichtung vor dem Wärmetauscher 40 angeordnet werden. Die Notkühlvorrichtung 80 wird aktiviert, wenn die Ist-Kühlfluidtemperatur des Kühlfluid in dem Schmierkreislauf 30 über einer vorgebbaren Maximal-Temperatur liegt. Dadurch wird sichergestellt, dass der Turbosatz 20 durch das Kühlfluid ausreichend gekühlt wird und keine Komponenten beschädigt werden.

Zum Erfassen der Ist-Kühlfluidtemperatur weist die Notkühlvorrichtung 80 einen nicht gezeigten Temperatursensor auf, der an dem Schmierkreislauf 30 angeordnet ist. Der Temperatursensor sendet ein Signal an eine nicht gezeigte Steuereinheit, die dazu eingerichtet ist, die Notkühlvorrichtung 80 zu aktivieren, wenn die Ist-Kühlfluid-temperatur ein vorgebbares Kriterium erfüllt, insbesondere über der vorgegebenen Maximal-Temperatur liegt. Insbesondere ist die Steuereinheit dazu eingerichtet, die Notkühlvorrichtung 80 zu deaktivieren, wenn die Ist-Kühlfluid-Temperatur in einem vorgebbaren Sollbereich und/oder unterhalb eines weiteren vorgebaren Grenzwerts liegt. Die Notkühlvorrichtung 80 weist beispielsweise einen Notkühlwärmetauscher auf, der mit Kühlwasser durchströmt und von dem Kühlfluid umströmt wird. Die Steuereinheit steuert dann zum Aktivieren und Deaktivieren der Notkühlvorrichtung 80 beispielsweise eine Kühlwasserpumpe zum Fördern von Kühlwasser in den Notkühlwärmetauscher an.

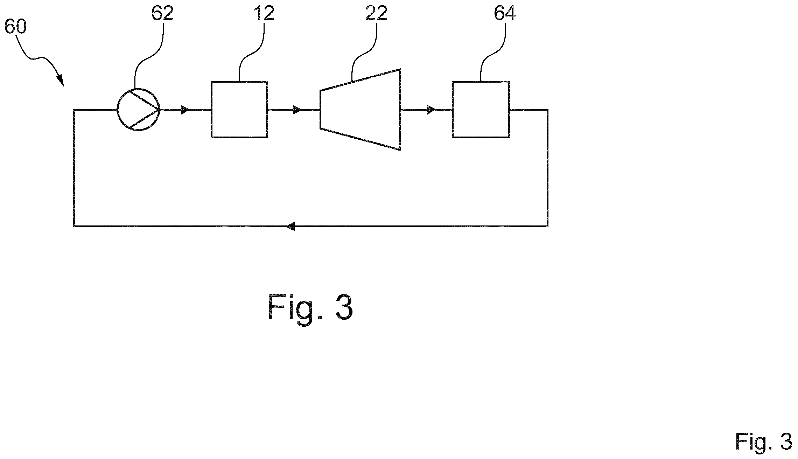

Figur 3 zeigt einen schematischen Flüssigkeitskreislauf 60 in einem erfindungsgemäßen Kraftwerk. Die Flüssigkeit, insbesondere Wasser, wird mithilfe einer Flüssigkeitspumpe 62 in Bewegung gesetzt. Zunächst passiert die Flüssigkeit den Brennraum 12, in dem es aufgrund der Erwärmung zu Dampf verdunstet. Der Dampf wird von dem Brennraum 12 weiter in die Turbine 22 geleitet, in der der Wasserdampf zum Antreiben des Rotors der Turbine 22 verwendet wird. Von der Turbine 22 wird der Dampf weiter in den Kondensator 64 geleitet. In dem Kondensator 64 kondensiert der Dampf. Von den Kondensator 64 wird die Flüssigkeit zu der Flüssigkeitspumpe 62 gefördert und der Kreislauf beginnt erneut. An dem Flüssigkeitskreislauf 60 kann ein Flüssigkeitstank angeordnet sein.

**Bezugszeichenliste**

| | | | |
|---|---|---|---|
| 10 | Verbrennungsanlage | 27 | weiterer Rotor |
| 11 | Kessel | 28 | Lager |
| 12 | Brennraum | 30 | Schmierkreislauf |
| 13 | Rost | 32 | Kühlfluidpumpe |
| 14 | Zuluftleitung | 33 | weitere Kühlfluidpumpe |
| 15 | Abgasstutzen | 34 | Tank |
| 16 | Primärluftzuleitung | 36 | Kühlabschnitt |
| 18 | Sekundärluftzuleitung | 38 | Filter |
| 19 | Sekundärluftzuleitungsabschnitte | 40 | Wärmetauscher |
| 20 | Turbosatz | 50 | Ventilator |
| 22 | Turbine | 60 | Flüssigkeitskreislauf |
| 23 | Getriebe | 62 | Flüssigkeitspumpe |
| 24 | Rotor | 64 | Kondensator |
| 26 | Generator | 70 | Brennstoff |
| 80 | Notkühlvorrichtung | | |

## Patentansprüche

1. Kraftwerk mit
(a) einer Verbrennungsanlage (10) mit
(i) einem Brennraum (12) zum Erzeugen von Dampf und
(ii) einer Zuluftleitung (14) zum Zuführen von Zuluft in den Brennraum (12),
(b) einem Turbosatz (20) mit
(i) einer Turbine (22) mit einem Rotor (24) und
(ii) einem Generator (26),
(c) einem Schmierkreislauf (30) zum Schmieren und Kühlen des Turbosatzes (20), wobei in dem Schmierkreislauf (30) ein Kühlfluid zirkuliert, und
(d) einem Wärmetauscher (40) zum Kühlen des Kühlfluids, wobei
(e) der Wärmetauscher (40) angeordnet ist zum Erwärmen der Zuluft.

2. Kraftwerk nach Anspruch 1, wobei der Schmierkreislauf (30) zum Schmieren und Kühlen der Lager (28) der Turbine (22), des Generators (26) und/oder eines Getriebes (23) angeordnet ist.

3. Kraft nach Anspruch 1 oder 2, wobei der Wärmetauscher (40) an oder zumindest teilweise, vorzugsweise jedoch vollständig, in der Zuluftleitung (14) angeordnet ist.

4. Kraftwerk nach einem der voranstehenden Ansprüche, wobei das Kraftwerk dazu eingerichtet ist, die Zuluft zusätzlich in Strömungsrichtung hinter dem Wärmetauscher (40) zu erhitzen.

5. Kraftwerk nach einem der voranstehenden Ansprüche, wobei die Zuluftleitung (14) eine Sekundärluftzuleitung (18) zum Zuführen von Sekundärluft in den Brennraum (12) ist.

6. Kraftwerk nach Anspruch 5, wobei die Sekundärluftzuleitung (18) in Strömungsrichtung hinter dem Wärmetauscher (40) in mehrere, strömungstechnisch parallel geschaltete Sekundärluftzuleitungsabschnitte (19) aufgeteilt ist.

7. Kraftwerk nach einem der voranstehenden Ansprüche, wobei die Verbrennungsanlage (10) ein Biomasse-Verbrennungskessel und/oder ein Festbrennstoff-Verbrennungskessel, insbesondere ein Holz-Verbrennungskessel oder ein Pellet-Verbrennungskessel ist.

8. Kraftwerk nach einem der voranstehenden Ansprüche, wobei der Wärmetauscher (40) ein Rippenrohrwärmetauscher ist

9. Kraftwerk nach einem der voranstehenden Ansprüche, wobei
der Rotor (24) über zumindest ein Lager (28) in der Turbine (22) angeordnet ist und
das zumindest eine Lager (28) mit dem Schmierkreislauf (30) strömungstechnisch verbunden ist.

10. Kraftwerk nach einem der voranstehenden Ansprüche, umfassend eine Notkühlvorrichtung (80) zum Kühlen des Kühlfluids mittels Kühlwasser.

11. Kraftwerk nach einem der voranstehenden Ansprüche, wobei der Wärmetauscher (40) höchstens 50 m, bevorzugt höchstens 20 m, besonders bevorzugt höchstens 10 m von dem Turbosatz (20) und/oder der Verbrennungsanlage (10) entfernt angeordnet ist.

12. Verfahren zum Betreiben eines Kraftwerks mit einer Verbrennungsanlage (10), die einen Brennraum (12) und eine Zuluftleitung (14) zum Zuführen von Zuluft aufweist, mit einem Turbosatz (20), der einen Generator (26) und eine Turbine (22) mit einem Rotor (24) aufweist, mit einem Schmierkreislauf (30) und mit einem Wärmetauscher (40), mit den Schritten:
(a) Schmieren und Kühlen des Turbosatzes (20) mit einem Kühlfluid, das in dem Schmierkreislauf (30) zirkuliert,
(b) Zuführen des Kühlfluids in den Wärmetauscher (40),
(c) Erwärmen der Zuluft durch den Wärmetauscher (40).

13. Verfahren nach Anspruch 12, weiter umfassend den Schritt
(a) Erfassen einer Temperatur des Kühlfluids und
(b) wenn die Temperatur eine Maximal-Temperatur überschreitet, Kühlen des Kühlfluids mittels einer Notkühlvorrichtung (80).

## Claims

1. A power station with
(a) an furnace (10) with
(i) a combustion chamber (12) for generating steam and
(ii) an air supply line (14) for feeding supply air into the combustion chamber (12),
(b) a turboset (20) with
(i) a turbine (22) with a rotor (24) and
(ii) a generator (26),
(c) a lubricant circuit (30) for lubricating and cooling the turboset (20), wherein a coolant circulates in the lubricant circuit (30), and
(d) a heat exchanger (40) for cooling the coolant,
wherein
(e) the heat exchanger (40) is arranged to heat the supply air.

2. The power station according to claim 1, **characterized in that**
the lubricant circuit (30) is arranged to lubricate and cool the bearings (28) of the turbine (22), the generator (26) and/or a transmission (23).

3. The power station according to claim 1 or 2, **characterized in that**
the heat exchanger (40) is arranged on or at least partially, but preferably fully, in the air supply line (14).

4. The power station according to one of the preceding claims, **characterized in that** the power station is configured to additionally heat the supply air downstream of the heat exchanger (40) in the direction of flow.

5. The power station according to one of the preceding claims, **characterized in that** the air supply line (14) is a secondary air supply line (18) for feeding secondary air into the combustion chamber (12).

6. The power station according to claim 5, **characterized in that**
the secondary air supply line (18) is divided into several secondary air supply line sections (19) fluidically connected in parallel in the direction of flow downstream of the heat exchanger (40).

7. The power station according to one of the preceding claims, **characterized in that** the furnace (10) is a biomass combustion furnace and/or a solid fuel combustion furnace, particularly a wood combustion furnace or a pellet combustion furnace.

8. The power station according to one of the preceding claims, **characterized in that** the heat exchanger (40) is a finned tube heat exchanger.

9. The power station according to one of the preceding claims, **characterized in that**
the rotor (24) is arranged in the turbine (22) via at least one bearing (28) and the at least one bearing (28) is fluidically connected to the lubricant circuit (30).

10. The power station according to one of the preceding claims, comprising an emergency cooling device (80) for cooling the coolant by means of cooling water.

11. The power station according to one of the preceding claims, **characterized in that** the heat exchanger (40) is arranged at most 50m, preferably at most 20m, especially preferably at most 10m, away from the turboset (20) and/or the furnace (10).

12. A method for operating a power station with an furnace (10) comprising a combustion chamber (12) and an air supply line (14) for feeding supply air; a turboset (20) comprising a generator (26) and a turbine (22) with a rotor (24); a lubricant circuit (30) and a heat exchanger (40), comprising the steps:
(a) lubricating and cooling the turboset (20) with a coolant that circulates in the lubricant circuit (30),
(b) feeding the coolant into the heat exchanger (40),
(c) heating the supply air through the heat exchanger (40).

13. The method according to claim 12, further comprising the step
(a) recording a temperature of the coolant and
(b) cooling the coolant by means of an emergency cooling device (80) if the temperature exceeds a maximum temperature.

## Revendications

1. Centrale électrique comprenant
(a) une installation de combustion (10) comprenant
(i) une chambre de combustion (12) pour produire de la vapeur et
(ii) une conduite d'alimentation en air (14) pour amener de l'air d'alimentation dans la chambre de combustion (12),
(b) un groupe turbogénérateur (20) comprenant
(i) une turbine (22) avec un rotor (24) et
(ii) un générateur (26),
(c) un circuit de lubrification (30) pour lubrifier et refroidir le groupe turbogénérateur (20), un fluide de refroidissement circulant dans le circuit de lubrification (30), et
(d) un échangeur de chaleur (40) pour refroidir le fluide de refroidissement,
(e) l'échangeur de chaleur (40) étant agencé pour chauffer l'air d'alimentation.

2. Centrale électrique selon la revendication 1,
dans laquelle le circuit de lubrification (30) est agencé pour lubrifier et refroidir les paliers (28) de la turbine (22), du générateur (26) et/ou d'un mécanisme (23).

3. Centrale électrique selon la revendication 1 ou 2,
dans laquelle l'échangeur de chaleur (40) est agencé sur la conduite d'alimentation en air (14) ou au moins partiellement, de préférence entièrement, dans celle-ci.

4. Centrale électrique selon l'une des revendications précédentes,
dans laquelle la centrale électrique est conçue pour chauffer en outre l'air d'alimentation en aval de l'échangeur de chaleur (40) dans le sens d'écoulement.

5. Centrale électrique selon l'une des revendications précédentes,
dans laquelle la conduite d'alimentation en air (14) est une conduite d'alimentation en air secondaire (18) pour amener de l'air secondaire dans la chambre de combustion (12).

6. Centrale électrique selon la revendication 5,
dans laquelle la conduite d'alimentation en air secondaire (18) est subdivisée, en aval de l'échangeur de chaleur (40) dans le sens d'écoulement, en plusieurs tronçons de conduite d'alimentation en air secondaire (19) montés fluidiquement en parallèle.

7. Centrale électrique selon l'une des revendications précédentes,
dans laquelle l'installation de combustion (10) est une chaudière de combustion de biomasse et/ou une chaudière de combustion de combustible solide, en particulier une chaudière de combustion de bois ou une chaudière de combustion de granulés.

8. Centrale électrique selon l'une des revendications précédentes,
dans laquelle l'échangeur de chaleur (40) est un échangeur de chaleur en tubes à ailettes.

9. Centrale électrique selon l'une des revendications précédentes,
dans laquelle le rotor (24) est agencé dans la turbine (22) par l'intermédiaire d'au moins un palier (28), et
ledit au moins un palier (28) est relié fluidiquement au circuit de lubrification (30).

10. Centrale électrique selon l'une des revendications précédentes, comprenant un dispositif de refroidissement de secours (80) pour refroidir le fluide de refroidissement au moyen d'eau de refroidissement.

11. Centrale électrique selon l'une des revendications précédentes,
dans laquelle l'échangeur de chaleur (40) est agencé à une distance maximale de 50 m, de préférence à une distance maximale de 20 m, de manière particulièrement préférée à une distance maximale de 10 m du groupe turbogénérateur (20) et/ou de l'installation de combustion (10).

12. Procédé d'exploitation d'une centrale électrique comprenant une installation de combustion (10) qui comprend une chambre de combustion (12) et une conduite d'alimentation en air (14) pour amener de l'air d'alimentation, comprenant un groupe turbogénérateur (20) qui comprend un générateur (26) et une turbine (22) avec un rotor (24), et comprenant un circuit de lubrification (30) et un échangeur de chaleur (40), comprenant les étapes suivantes consistant à :
(a) lubrifier et refroidir le groupe turbogénérateur (20) avec un fluide de refroidissement circulant dans le circuit de lubrification (30),
(b) amener le fluide de refroidissement dans l'échangeur de chaleur (40),
(c) chauffer l'air d'alimentation à travers l'échangeur de chaleur (40).

13. Procédé selon la revendication 12, comprenant en outre l'étape consistant à
(a) détecter une température du fluide de refroidissement, et
(b) si la température dépasse une température maximale, refroidir le fluide de refroidissement au moyen d'un dispositif de refroidissement de secours (80).
